# EUROPEAN PATENT SPECIFICATION

(11) **EP 3 790 024 B1**
(45) Date of publication and mention of the grant of the patent: **16.08.2023**
(21) Application number: 19802853.2
(22) Date of filing: 09.05.2019
(51) Int. Cl.: G21D 1/00, G21C 19/32

(54) **REMOTE DISMANTLING SYSTEM AND METHOD FOR NUCLEAR POWER PLANT**
FERNGESTEUERTES DEMONTAGESYSTEM UND -VERFAHREN FÜR KERNKRAFTWERKE
SYSTÈME ET PROCÉDÉ DE DÉMANTÈLEMENT À DISTANCE POUR CENTRALE NUCLÉAIRE

(30) Priority: 14.05.2018 KR 20180055140
(43) Date of publication of application: 10.03.2021
(73) Proprietor: Korea Atomic Energy Research Institute, Daejeon 34057 (KR)
(72) Inventor: HYUN, Dongjun, Daejeon 34191 (KR); KIM, Changhoi, Sejong-Si 30150 (KR); LEE, Sunguk, Daejeon 34844 (KR); KANG, Shinyoung, Daejeon 34178 (KR)
(74) Representative: Regimbeau
(86) International application number: PCT/KR2019/095004
(87) International publication number: WO 2019/221585

(56) References cited:
- JP-A- H0 771 205
- JP-A- H11 118 985
- KR-A- 20150 075 822
- KR-A- 20150 075 822
- KR-B1- 101 522 224
- KR-B1- 101 522 224
- KR-B1- 101 754 538

## Description

### TECHNICAL FIELD

The present disclosure relates to a remote dismantling system for a nuclear power plant capable of improving economic efficiency and safety of a dismantling process for core facilities of the nuclear power plant, and a nuclear power plant having the same.

### BACKGROUND ART

Core facilities of nuclear power plants have high level of radioactivity, which makes it difficult for workers to approach the core facilities.

For this reason, remotely operated cutting equipment is required to dismantle the core facilities of the nuclear power plants.

In the related art, different cutting equipment must be used for each unit dismantling process, which causes the risk that the operator is exposed to radioactivity, increases the risk of accidents, and takes a long preparation time.

In order to overcome those disadvantages, the applicant has applied for a patent on and registered for a remote cutting system, which can manipulate an entire process of dismantling core facilities of a nuclear power plant without replacement of equipment, and a nuclear power plant dismantling system having the same (see the Patent Documents below).

According to the Patent Document, one robot arm is provided for a cutting operation, and the transfer of cut pieces depends on a crane.

However, since the crane is configured such that a gripper suspended from a wire extending downward from a top is lifted and lowered, if there is a structure on the top of cut pieces, complex structures of core facilities of a nuclear power plant are difficult to be cut and transferred due to interference between the gripper and the upper structure.

In addition, since the gripper is lowered with the wire from the top of the structure, it is vulnerable to vibration. Also, it is difficult to move the gripper to precise positions of the complex structures.

Other examples of a dismantling robot system are disclosed in KR 20150075822 A.

The related art problems will be described in more detail as follows.

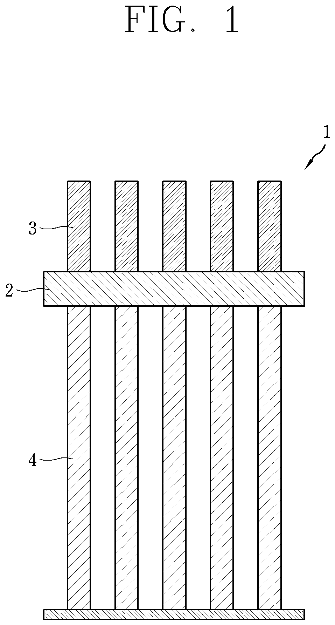

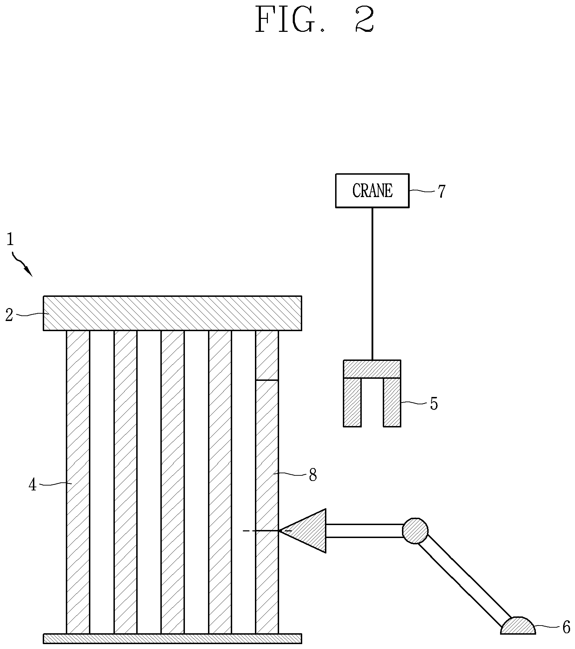

FIG. 1 is a conceptual view illustrating an upper internal structure constituting the related art reactor pressure vessel, and FIG. 2 is a conceptual view illustrating a dismantling process of the upper internal structure of FIG. 1.

Among structures constituting the reactor pressure vessel, the most complex structure is an upper internal structure 1. As the first step of a process of dismantling the upper internal structure 1, a cutting robot arm 6 first cuts control rod guide tubes 3 and upper measuring columns that protrude from the top of an upper support assembly 2 and transfers a cut piece 8.

At this time, no problem occurs when a gripper 5 lowered from an upper crane 7 grips and transfers the cut piece 8.

The second step is to cut the upper support assembly 2.

The third step is to cut a lower control rod guide tube 4 and an upper support column and transfer the cut piece 8.

However, even if the upper support assembly 2 is cut in the second step, the upper support assembly 2 cannot be transferred unless the lower control rod guide tubes 4 and the upper support columns are cut.

For this reason, in the third step, the upper support assembly 2 still remains on the top, and thereby the gripper 5 lowered from the crane 7 is difficult to grip the cut piece 8 of FIG. 2 due to interference with the upper support assembly 2

If the gripper 5 is manufactured in a special shape, for example, if the gripper 5 is manufactured to be moved to a part deeply inside the upper support assembly 2 for gripping the cut piece 8, the gripper 5 has to be formed long in right and left directions. This causes problems that the gripper 5 should be greatly increased in size and replacement to a larger gripper is needed during a dismantling process.

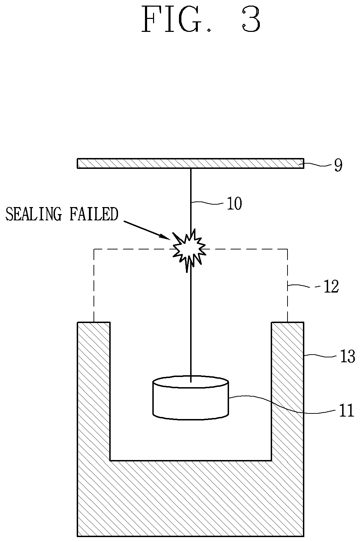

In addition, FIG. 3 is a schematic view for explaining a problem caused during a dismantling process of a nuclear power plant according to the related art. The related art is configured such that a polar crane 9 is installed at a containment building to transfer structures having heavy weights when installing and dismantling the nuclear power plant.

However, the polar crane 9 located at the top of the containment building is configured to take a wire 10 down to lift a structure 11 to be dismantled. Accordingly, a sealing member 12 such as vinyl cannot seal a reactor pool 13, which is used as a dismantling workplace, due to the wire 10.

In this case, any problem may not occur when cutting the structure 11 to be dismantled by a mechanical cutting method. However, when the structure 11 to be dismantled is cut by an oxygen-propane cutting or laser cutting method that generates harmful gases, a problem arises because the dismantling workplace cannot be effectively sealed.

### [Prior Art Document]

### [Patent Document]

(Patent Document 1) Korean Registration Patent Application No. 10-1522224 (May 15, 2015)

### DISCLOSURE

### TECHNICAL PROBLEM

One aspect of the present disclosure is to provide a remote dismantling system for a nuclear power plant, capable of facilitating a transfer of cut pieces of a complex structure by additionally employing a transfer robot arm, which grips cut pieces of a dismantled structure to transfer to a temporary basket which is being gripped by a gripper of a crane, so that the gripper of the crane can transfer merely the basket without gripping the cut pieces, and a nuclear power plant having the same.

Another aspect of the present disclosure is to provide a remote dismantling system for a nuclear power plant, capable of sealing a dismantling workplace even if lifting of a structure to be dismantled and a transfer of cut pieces are performed simultaneously in the same space, by constituting a transfer system with a gantry crane and a jib crane.

### TECHNICAL SOLUTION

To achieve these and other advantages and in accordance with the purpose of the present invention, as embodied and broadly described herein, there are provided a remote dismantling system according to claim 1 and a remote dismantling method according to claim 11 using the system as defied in claim 1 and the corresponding dependent claims. The present application also discloses a remote dismantling system including: a robot arm system provided with a cutting robot arm for cutting an object to be cut and a transfer robot arm for transferring cut pieces, which have been cut from the object to be cut, the cutting robot arm and the transfer robot arm being arranged to be movable in a vertical direction, respectively; a transfer system provided with a gantry crane for transferring the object to be cut and a jib crane for receiving and transferring the cut pieces from the transfer robot arm, the gantry crane and the jib crane being arranged to be movable across each other; and a band saw and turntable system provided with a horizontal support frame, a turntable having the object to be cut placed thereon, and installed on the horizontal support frame to be horizontally movable and rotatable, and a band saw for cutting the object to be cut placed on the turntable.

According to one implementation, the robot arm system may include a plurality of vertical rails extending in parallel in a vertical direction and having the cutting robot arm and the transfer robot arm mounted thereto to be movable up and down; and lifting blocks mounted to the plurality of vertical rails to be movable up and down and allowing the cutting robot arm or the transfer robot arm to be movable up and down.

According to one implementation, the band saw and turntable system may further include a supporting part extending in the vertical direction and disposed on one side surface of the horizontal support frame, and an up/down movement part installed to be movable up and down along the supporting part. The band saw may be rotatably mounted on the up/down movement part.

According to one implementation, the transfer system may include a plurality of traveling rails disposed above the robot arm system and the band saw and turntable system and spaced apart from each other, and the gantry crane may be movably mounted to the plurality of traveling rails.

According to one implementation, the cutting robot arm may be provided with any one of a laser cutting head, a circular saw, and a drill as an end-effector.

According to one implementation, the transfer robot arm may be provided with a gripper as an end-effector.

According to one implementation, the up/down movement part may be formed in a rectangular plate shape having one side open. The band saw and turntable system may further include support rollers rotatably mounted on four corners of one surface of the up/down movement part to rotatably support the band saw.

According to one implementation, the horizontal support frame may be formed in a rectangular shape, and the plurality of vertical rails may be spaced apart from each other along a side surface of the horizontal support frame in the longitudinal direction when viewing the horizontal support frame from the top, such that the cutting robot arm and the transfer robot arm are mounted to the plurality of vertical rails to be movable in a direction intersecting with the turntable that horizontally moves in a transverse direction of the horizontal support frame.

According to one implementation, the band saw and turntable system may further include a supporting part extending along the vertical direction and disposed on one side surface of the horizontal support frame. The supporting part may be disposed on a side surface of the horizontal support frame in the transverse direction when viewing the horizontal support frame from the top, and the band saw may be mounted to the supporting part to be movable in the direction intersecting with the turntable that horizontally moves in the transverse direction of the horizontal support frame.

According to one implementation, the gantry crane may include a moving frame mounted to be movable along the traveling rails, a longitudinal movement unit mounted on an upper part of the moving frame to be movable in the vertical direction intersecting with the traveling rails, a winding unit provided on the longitudinal movement unit to wind a wire, and a gripper connected to one end of the wire to be moved down toward the turntable from the winding unit and moved up toward an original position.

According to one implementation, the jib crane may include a vertical column part disposed between the plurality of traveling rails, a rotation arm part extending from an upper end portion of the vertical column part in a direction intersecting with the moving frame that extends in the longitudinal direction across the plurality of traveling rails, and installed to be rotatable centering on the vertical column part, a movable winding portion mounted to be movable along with the rotation arm part and having a wire wound thereon, and a gripper connected to the wire of the movable winding portion and installed to be moved down toward the transfer robot arm from the movable winding portion or moved up toward an original position.

According to one implementation, the object to be cut may be an upper internal structure among structures constituting a reactor vessel. The upper internal structure may include an upper support assembly, an upper core plate spaced apart downwardly from the upper support assembly, first control rod guide tubes and upper measurement columns protruding from a top of the upper support assembly, and second control rod guide tubes and upper support columns extending downward from a bottom of the upper support assembly to the upper core plate. The transfer robot arm may grip the second control rod guide tube and the upper support column while the upper support assembly remains on the top, and the cutting robot arm may cut a part of the second control rod guide tube and the upper support column.

According to one implementation, a temporary storage basket may be installed within a rotation radius of the transfer robot arm, and the transfer robot arm may transfer the cut pieces to the temporary storage basket gripped by the jib crane.

To achieve these and other advantages and in accordance with the purpose of the present invention, as embodied and broadly described herein, there is provided a nuclear power plant including a reactor pool, a reactor cavity structure provided at one side in the reactor pool to accommodate a reactor vessel therein, and a remote dismantling system for a nuclear power plant, the system installed in a temporary accommodation space defined at another side in the reactor pool to dismantle the reactor vessel therein. The remote dismantling system for the nuclear power plant may include a robot arm system having a cutting robot arm and a transfer robot arm mounted to be movable up and down along a plurality of vertical rails, a band saw and turntable system provided with a turntable installed on a top of a horizontal support frame to be horizontally movable and rotatable in a direction intersecting with the plurality of vertical rails, and a band saw for cutting the reactor vessel placed on the turntable, and a transfer system provided with a gantry crane for transferring a structure cut by the ban saw, and a jib crane configured to transfer a cut piece of an object to be cut from the transfer robot arm.

According to one implementation, the gantry crane and the jib crane may be arranged to intersect with each other without interference during movement.

According to one implementation, the gantry crane and the jib crane may be disposed on a top of the reactor pool, and the remote dismantling system may further include a sealing member having both sides connected to the top of the reactor pool to enclose an outside of the gantry crane and the jib crane so as to seal the top of the reactor pool.

According to one implementation, the horizontal support frame may have a height equal to or higher than an upper surface of the reactor cavity structure, so that a horizontal movement distance of the turntable from the cutting robot arm extends up to the upper surface of the reactor cavity structure.

According to one implementation, the cutting robot arm and the transfer robot arm may be spaced apart from each other on a right surface of the horizontal support frame.

### ADVANTAGEOUS EFFECTS

A remote dismantling system for a nuclear power plant and a nuclear power plant having the same according to the present disclosure will provide the following effects.

First, the dismantling system for the nuclear power plant can process an entire dismantling process without an installation of additional equipment or removal of any equipment after installed once in an initial stage of the dismantling process. Accordingly, the time required for the installation and addition of the equipment can be reduced, and an operator does not need to approach a workspace having high-level radioactivity for an installation or dismantling operation, thereby simultaneously enhancing economic efficiency and safety of the dismantling process.

Second, a cutting robot arm and a transfer robot arm may be arranged vertically in parallel such that the cutting robot arm can cut a complex structure into pieces while the transfer robot arm grips the complex structure, thereby facilitating the transfer of the cut pieces of the complex structure by avoiding interference between an upper support assembly located at an upper part and a gripper of a crane.

Third, as the gantry crane and the jib crane which constitute a transfer system are disposed to intersect with each other to transfer cut pieces in the same narrow workplace without interference during movement within the narrow workplace.

Fourth, a band saw system may have a band-shaped cutting blade that rotates in one direction, and thus can effectively cut a large structure.

Fifth, a turntable system can secure a horizontal movement distance of the turntable such that the turn table can move horizontally as wide as possible in a lengthwise direction of a reactor pool, and the band saw system may be disposed on a long wall surface of the reactor pool. This may result in efficiently utilizing an installation space of the dismantling system.

Sixth, since the gantry crane and the jib crane does not interfere with each other in the same space and the jib crane is arranged inside the gantry crane, a dismantling workplace can be sealed even if lifting of a structure to be dismantled and transfer of cut pieces are performed simultaneously.

### BRIEF DESCRIPTION OF THE DRAWINGS

FIG. 1 is a conceptual view illustrating an upper internal structure constituting a reactor pressure vessel according to the related art.
FIG. 2 is a conceptual view illustrating a dismantling process of the upper internal structure of FIG. 1.
FIG. 3 is a schematic view for explaining a problem caused during a dismantling process of a nuclear power plant according to the related art.
FIG. 4 is a conceptual view illustrating a remote dismantling system for a nuclear power plant according to the present disclosure.
FIG. 5 is a diagram illustrating a cutting robot arm and a transfer robot arm mounted to vertical rails, and each robot arm in an enlarged state.
FIG. 6 is a conceptual view illustrating a state in which a circular saw is attached to the cutting robot arm of FIG. 5.
FIG. 7 is a conceptual view illustrating a transfer system in FIG. 4.
FIG. 8 is a conceptual view illustrating a band saw and turntable system in FIG. 4.
FIG. 9 is a conceptual view illustrating a state (layout) in which a band saw and turntable system according to the present disclosure is installed inside a reactor pool of a nuclear power plant.
FIG. 10 is a planar view taken along the line X-X in FIG. 9 which is a conceptual view illustrating a layout in which the cutting robot arm and a transfer robot arm are disposed on a right surface of the turntable.
FIG. 11 is a conceptual view illustrating a state in which a gantry crane and a jib crane are disposed to intersect with each other, taken along the line XI-XI in FIG. 9.
FIG. 12 is a conceptual view illustrating a state in which a cutting robot arm cuts a part of an upper internal structure and a transfer robot arm transfers the cut piece, according to the present disclosure.
FIG. 13 is a cross-sectional view taken along the line XIII-XIII of FIG. 11, which is a conceptual view illustrating a state in which a sealing member seals a dismantling workplace.

### MODES FOR CARRYING OUT THE PREFERRED IMPLEMENTATIONS

Description will now be given in detail according to exemplary implementations disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

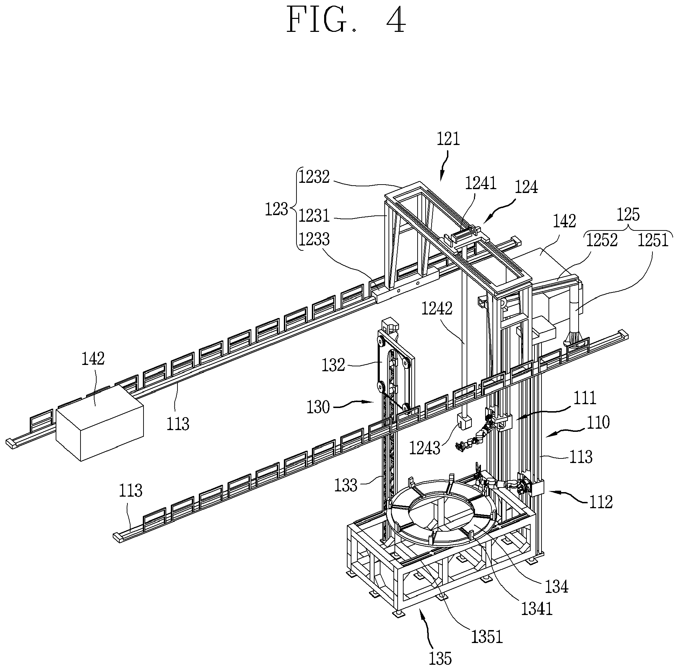

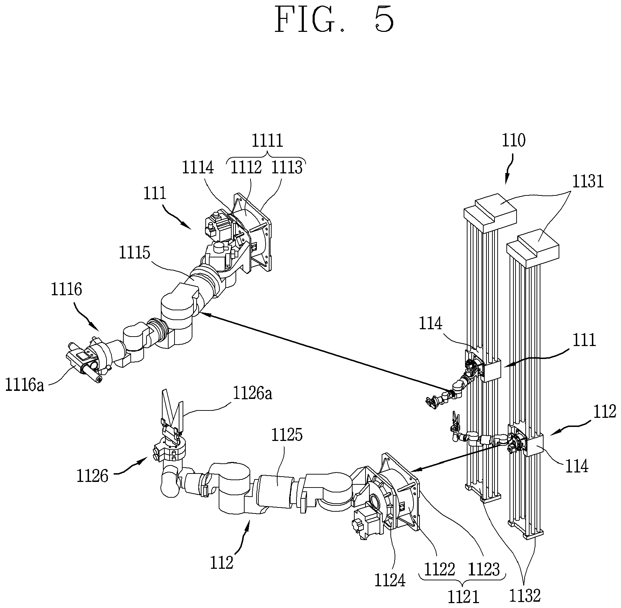

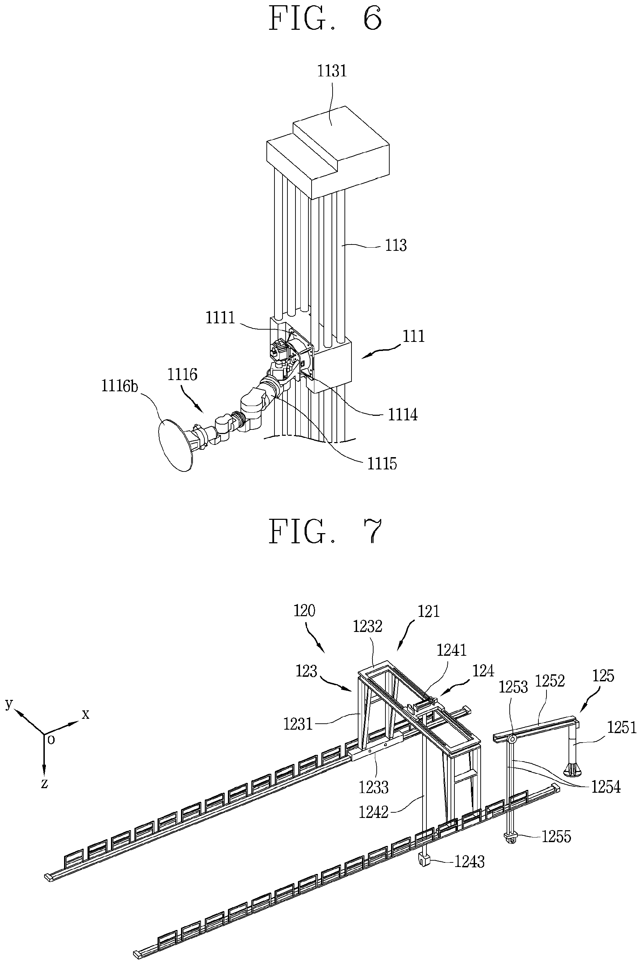

FIG. 4 is a conceptual view illustrating a remote dismantling system for a nuclear power plant according to the present disclosure, FIG. 5 is a diagram illustrating a cutting robot arm 111 and a transfer robot arm 112 mounted to vertical rails 113, and each robot arm in an enlarged state, and FIG. 6 is a conceptual view illustrating a state in which a circular saw 1116b is attached to the cutting robot arm 111 of FIG. 5.

A remote dismantling system for a nuclear power plant according to the present disclosure may be used to dismantle core facilities of the nuclear power plant.

The dismantling system for the nuclear power plant may be installed at a place near a reactor pool 101. The dismantling system for the nuclear power plant may be installed in a temporary accommodation space 102 provided inside a nuclear reactor containment building to pile up internal structures of the reactor pool 101, which are taken out from the reactor pool 101 during refueling or maintenance of nuclear fuel rods.

The dismantling system for the nuclear power plant may be installed inside the reactor pool 101.

The dismantling system for the nuclear power plant of the present disclosure may include a parallel vertical rail robot arm system 110, a cross-transfer system 120, a band saw and turntable system 130.

Each of the parallel vertical rail robot arm system 110, the cross-transfer system 120, and the band saw and turntable system 130 may be remotely controlled by being connected to a control system, which is spaced apart from core facilities of the nuclear power plant by a predetermined distance or more, to perform communication with each other.

The parallel vertical rail robot arm system 110 may perform an operation of cutting and transferring an object to be dismantled.

To this end, the parallel vertical rail robot arm system 110 may include a cutting robot arm 111 and a transfer robot arm 112.

The cutting robot arm 111 and the transfer robot arm 112 may be mounted to a plurality of vertical rails 113, respectively, to be moved up and down. The plurality of vertical rails 113 may extend in a vertical direction and be disposed in parallel with each other.

The plurality of vertical rails 113 may be spaced apart from each other along a lengthwise direction of the reactor pool 101.

Each of the plurality of vertical rails 113 may extend in the vertical direction between an upper support portion 1131 and a lower support portion 1132 that are spaced apart from each other along the vertical direction, and an upper end portion of each of the plurality of vertical rails 113 may be connected to the upper support portion 1131 and a lower end portion of each of the plurality of vertical rails 113 may be connected to the lower support portion 1132.

The cutting robot arm 111 and the transfer robot arm 112 may be mounted to the vertical rails 113 by means of lifting blocks 114, respectively, to be movable up and down.

The cutting robot arm 111 and the transfer robot arm 112 may be provided with connection brackets 1111 and 1121, respectively, to be coupled to the lifting blocks 114. Each connection bracket 1111, 1121 may be provided with a bracket body 1112, 1122 formed in a cylindrical shape, and a flange portion 1113, 1123 formed in a rectangular shape on one side surface of the bracket body 1112, 1122. Four corners of the flange 1113, 1123 may be coupled to the lifting block 114 by bolts.

A plurality of rail insertion holes may be formed through both side portions of the lifting block 114, and the vertical rail 113 may be inserted through the rail insertion holes, so that the cutting robot arm 111 and/or the transfer robot arm 112 can move up and down along the vertical rail 113.

The implementation disclosed herein exemplarily illustrates three rail insertion holes formed through each of both sides of the lifting block 114. However, the number of rail insertion holes may not be limited thereto but may differ depending on shape and size of the lifting block 114.

The lifting block 114 may be connected to a driving unit such as a motor to be driven in the vertical direction.

The robot arm may be called a manipulator. The robot arm may be a mobile robot that is coupled to the lifting block 114. The robot arm may include a body part 1114, 1124 supporting the robot arm, an arm part 1115, 1125 configured to move a hand or wrist to a desired position or in a desired direction, and a hand part 1116, 1126 gripping an object to be treated or perform a given task.

The arm part 1115, 1125 may be configured as a multi-joint type having a plurality of joints, so as to be rotatable back and forth, right and left, and up and down.

The body part 1114, 1124 and the arm part 1115, 1125 may be commonly applied to the cutting robot arm 111 and the transfer robot arm 112.

Meanwhile, the hand parts 1116 and 1126 of the cutting robot arm 111 and the transfer robot arm 112 may be configured to perform different tasks from each other.

The hand part 1116, 1126 may be classified into a gripper 1126a or an end-effector depending on a function.

The transfer robot arm 112 may be provided with a gripper 1126a at a position of the hand part 1126 to perform a function of holding or transferring an object.

The transfer robot arm 112 may secure an object to be cut and store cut pieces in a temporary storage basket 141 or transfer the cut pieces to a gripper 1255 of a jib crane 125 so that the jib crane 125 can transfer the cut pieces.

The cutting robot arm 111 may be configured to perform a cutting operation using cutting tools.

The cutting robot arm 111 may be provided with an end-effector at a position of the hand part 1116, and various cutting tools may be attached as the end-effector to be used instead of a hand.

The cutting robot arm 111 may be provided with a laser cutting head 1116a, a circular saw 1116b, a hydraulic cutter, a drill, or the like, as an end-effector.

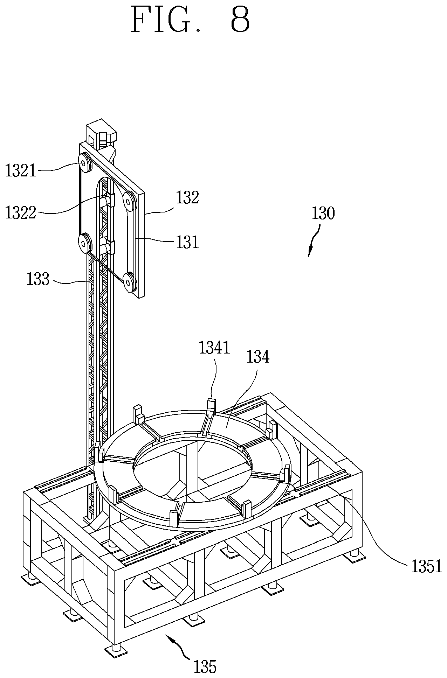

FIG. 7 is a conceptual view illustrating a transfer system in FIG. 4, and FIG. 8 is a conceptual view illustrating a band saw system and a turntable system in FIG. 4.

The transfer system may include a gantry crane 121 and a jib crane 125.

The gantry crane 121 and the jib crane 125 may be disposed to intersect with each other, and may be configured to transfer objects to be transferred in the same space without overlapping each other during movement in a narrow dismantling workplace.

The gantry crane 121 may mainly serve to transfer a large object to be cut to a turntable 134 or to fix the object to be cut.

The gantry crane 121 may be configured to be linearly movable. The gantry crane 121 may be configured to be movable, for example, in X-axis, Y-axis, and Z-axis directions in a three-dimensional orthogonal coordinate system.

The gantry crane 121 may include transverse traveling rails 122, a moving frame 123, and a longitudinal movement unit 124.

The transverse traveling rails 122 may extend parallel to each other in a transverse direction, and may be disposed on the top of the reactor pool 101. The transverse traveling rails 122 may guide the moving frame 123 to be movable along the transverse direction (X-axis direction).

The moving frame 123 may include a plurality of vertical supports 1231 extending vertically on both sides thereof, an upper support 1232 installed on the vertical supports 1231, and linear guides 1233 disposed on lower portions of the plurality of vertical supports 1231.

The linear guides 1233 may extend in the transverse direction. The linear guides 1233 may be slidably coupled to the traveling rails 122 to support the moving frame 123 so that the moving frame 123 is be movable along the traveling rails 122 in the transverse direction.

The plurality of vertical supports 1231 may be arranged on the traveling rails 122 to be transversely spaced apart from each other. A lower end portion of each vertical support 1231 may be connected to an upper surface of the corresponding linear guide 1233 and an upper end portion of the vertical support 1231 may be connected to the upper support 1232.

The upper support 1232 may be formed in a rectangular shape. Two long edges of edges of the upper support 1232 may extend longitudinally to intersect with the transverse traveling rails 122.

The longitudinal movement unit 124 may be provided with a plurality of rollers (not illustrated) on both lower sides so as to be movable in the longitudinal direction (Y-axis direction) along the upper support 1232.

The longitudinal movement unit 124 may include a winding portion 1241 configured to wind or unwind a wire 1242, and a gripper 1243 connected to an end portion of the wire 1242. As the wire 1242 is wound or unwound, the gripper 1243 may rise and fall in an up/down direction (Z-axis direction).

The gripper 1243 may be configured in the form like a human finger to hold or put down an object to be cut.

The gantry crane 121 may transfer a large object to be cut by being configured such that the moving frame 123 is movable in the X-axis direction along the traveling rails 122, the longitudinal movement unit 124 is movable in the Y-axis direction along the upper support 1232 of the moving frame 123, and the gripper 1243 is moved up and down in the Z-axis direction by the wire 1242. In addition, the gantry crane 121 may secure the object to be cut at a predetermined height while gripping it by the gripper 1243.

The jib crane 125 may serve to transfer the temporary storage basket 141 in which the cut pieces are accommodated or transfer the cut pieces.

The jib crane 125 may include a vertical column part 1251 extending in the vertical direction, and a rotation arm part 1252 rotatably installed at an upper end of the vertical column part 1251.

The vertical column part 1251 may be formed in a cylindrical shape, and have a height lower than that of the vertical support 1231 of the gantry crane 121. The vertical column part 1251 may be disposed between the two traveling rails 122.

The rotation arm part 1252 may be formed of an H-beam, and installed at an upper end of the vertical column part 1251 in a cantilever shape. One side of the rotation arm part 1252 may be rotatably coupled to an upper end of the vertical column part 1251, and another side may extend horizontally as a free end. The rotation arm part 1252 may have a length shorter than an interval between the two traveling rails 122. The rotation arm part 1252 may be configured to be rotatable only within a predetermined angle range centering on the vertical column part 1251 so as not to deviate outward from the traveling rails 122.

A movable winding portion 1253 may be mounted to one side surface of the rotation arm part 1252 to be movable in a lengthwise direction. The movable winding portion 1253 may be configured such that a wire 1254 is wound or unwound therein. The movable winding portion 1253 may be provided with a moving roller on one side surface thereof so as to be rollable in the lengthwise direction of the rotation arm part 1252.

A gripper 1255 may be installed on the wire 1254 of the movable winding portion 1253. The gripper 1255 of the movable winding portion 1253 may be configured to grip or put down a small object to be cut, such as a cut piece.

According to this configuration, the moving frame 123 of the gantry crane 121 may be movable in the transverse direction along the traveling rails 122, and the rotation arm part 1252 of the jib crane 125 may be rotatable within the predetermined angle range between the two traveling rails 122, so that the gantry crane 121 and the jib crane 125 can be disposed to intersect with each other without interference.

A band saw system may include a band saw 131 formed in a rectangular band shape, an up/down movement part 132 on which the band saw 131 is rotatably mounted, and a supporting part 133 supporting the up/down movement part 132 to be movable up and down.

The supporting part 133 may be a rectangular structure extending in the vertical direction.

The up/down movement part 132 may be provided with a coupling portion 1322 and may be coupled to be movable along the supporting part 133. The coupling portion 1322 may protrude from one side of the up/down movement part 132 toward the supporting part 133 to surround the supporting part 133, and thus support the up/down movement part 132 to be movable up and down.

The up/down movement part 132 may be formed in a shape in which an alphabet "U" is upside down. The up/down movement part 132 may have a plate structure that is open downward. Supporting rollers 1321 may be rotatably mounted on four corners of one side surface of the up/down movement part 132.

The band saw 131 may be provided with a cutting blade on its outer side, and configured to be rotatable in one direction while its inner portion is caught by the four supporting rollers 1321.

According to the band saw system of the present disclosure, energy loss can be reduced compared to a linear reciprocating cutting device in which a cutting blade is linearly reciprocated.

In addition, as the up/down movement part 132 is formed in the shape of the upside-down "U" and opened downward, the structure of the up/down movement part 132 may be changed in a manner of increasing a width of the lower opening and a height in the up/down direction, which may facilitate the cutting of a thick object.

In the case of a circular cutting blade, a rotation axis of the cutting blade is provided in the center of rotation. This causes a diameter of the cutting blade to be three times larger than a thickness of an object to be cut. Therefore, the band saw system having the up/down movement part 132 with the shape of the upside-down "U" may be advantageous when cutting a thick object.

A turntable system may include an annular turntable 134 installed on a top of a horizontal support frame 135 to be movable horizontally.

The turntable 134 may be formed in the shape of a circular plate so that an object to be cut can be placed on its upper surface.

The turntable 134 may be rotatable on the horizontal support frame 135 to rotate the object to be cut.

A plurality of rotation rollers (not illustrated) may be provided on a lower surface of the turntable 134 in a contact manner. As the rotation rollers rotates, the turntable 134 may be rotatable by 360 degrees.

The horizontal support frame 135 may be formed in a rectangular shape extending in the vertical direction at a predetermined height. The horizontal support frame 135 may extend to be long in the transverse direction and extend in the longitudinal direction to be relatively shorter than the transverse length.

A plurality of horizontal guide rails 1351 may be disposed in parallel on a top of the horizontal support frame 135. The plurality of horizontal guide rails 1351 may support the turntable 134 so as to be movable along the transverse direction.

The horizontal support frame 135 may extend in the vertical direction at a predetermined height.

A plurality of fixing protrusions 1341 may protrude from an outer end portion of the turntable 134, to prevent the turntable 134 from being separated to outside while an object to be cut is placed on the turntable 134. The plurality of fixing protrusions 1341 may be spaced apart from one another in a circumferential direction.

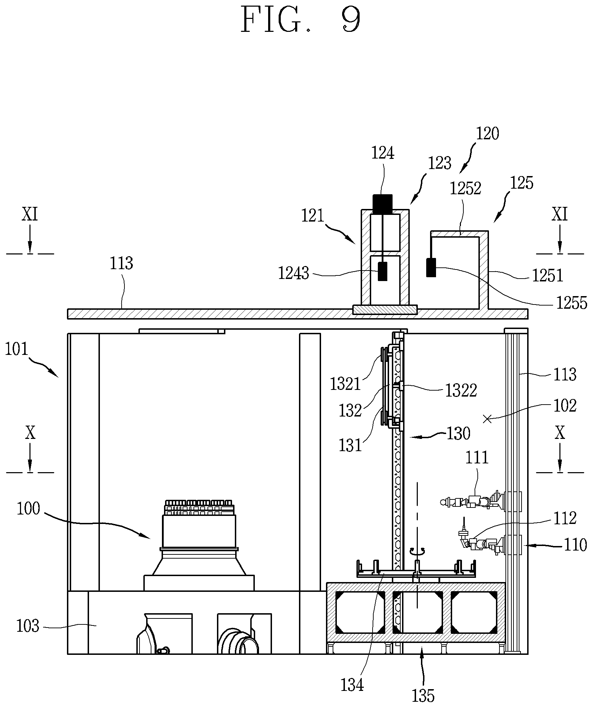

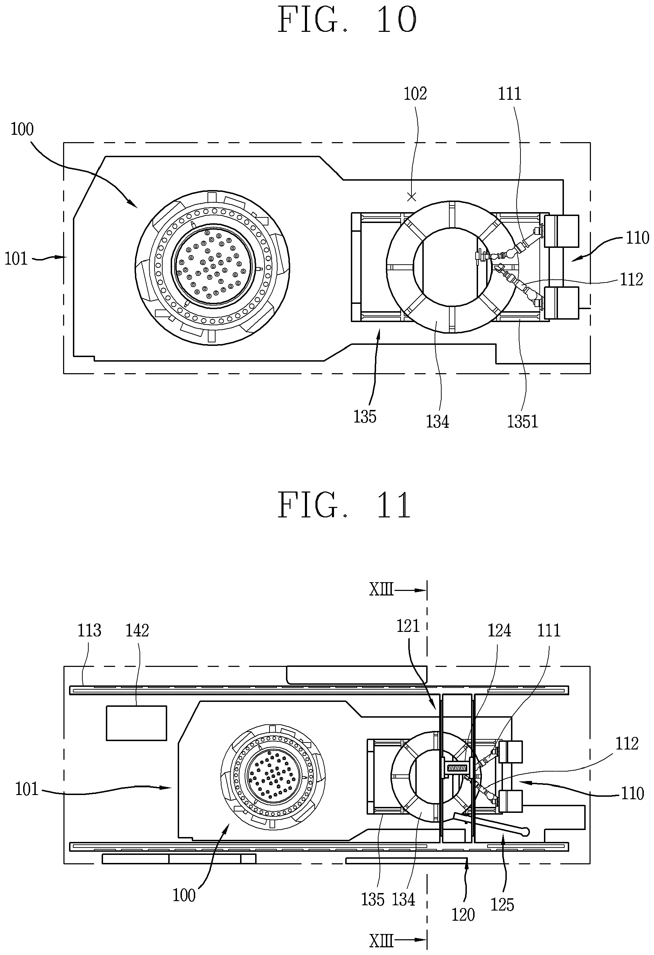

FIG. 9 is a conceptual view illustrating a state (layout) in which the band saw and turntable system according to the present disclosure is installed inside the reactor pool 101 of the nuclear power plant, FIG. 10 is a planar view taken along the line X-X in FIG. 9 which is a conceptual view illustrating a state in which the cutting robot arm 111 and the transfer robot arm 112 are disposed on a right surface of the turntable 134, and FIG. 11 is a conceptual view illustrating a state in which the gantry crane 121 and the jib crane 125 are disposed to intersect with each other, taken along the line XI-XI in FIG. 9.

A reactor vessel 100 may be disposed at the lower left side of the reactor pool 101 to be accommodated in a reactor cavity structure 103.

A temporary accommodation space 102 for temporarily accommodating internal structures of the reactor vessel 100 when refueling a nuclear fuel rod may be disposed at the right side of the reactor pool 101.

The parallel vertical rail robot arm system 110 and the band saw and turntable system 130 may be installed.

The turntable system may be installed such that the long edges of the horizontal support frame 135 extend along a right and left direction (lengthwise or transverse direction) of the reactor pool 101, and the short edges of the horizontal support frame 135 extend in a front and rear direction (longitudinal direction) of the reactor pool 101.

The cutting robot arm 111 and the transfer robot arm 112 of the parallel vertical rail robot arm system 110 may be installed in parallel to be movable up and down along the vertical rails 113 vertically extending on a right wall of the temporary accommodation space 102.

The parallel vertical rail robot arm system 110 may be disposed on the right surface of the horizontal support frame 135 (see FIG. 10). That is, the cutting robot arm 111 and the transfer robot arm 112 may be arranged on the right edge of the short edges of the horizontal support frame 135 to be spaced apart from each other along the longitudinal direction (hereinafter, referred to as a longitudinal layout structure of the parallel vertical rail robot arm system 110).

The cutting robot arm 111 and the transfer robot arm 112 may be arranged on a rear edge of the long edges of the horizontal support frame 135 to be spaced apart from each other along the transverse direction (hereinafter, referred to as a transverse layout structure of the parallel vertical rail robot arm system 110). In this case, the cutting robot arm 111 and the transfer robot arm 112 that are spaced apart from each other along the direction that the turntable 134 horizontally moves, which may result in expanding a working space wide in the right and left directions. However, if a position where the robot arm performs a cutting operation is too far from the robot arm, the maximum distance that the robot arm reaches has to be increased.

On the other hand, when the cutting robot arm 111 and the transfer robot arm 112 are disposed to be spaced apart from each other in the longitudinal direction on the right surface of the horizontal support frame 135, it may be disadvantageous to expand the working space of the robot arms wide to the left and right. However, the maximum distance that the robot arms can reach can be shortened compared with the transverse layout structure of the parallel vertical rail robot arm system 110, thereby utilizing various advantages in setting detailed technical requirements of the robot arms. In addition, since the core facilities of the nuclear power plant is occupied mostly by a cylindrical structure in addition to the upper internal structure 104 of the nuclear reactor, the space expansion to the left and right is not so significant. Therefore, the longitudinal layout structure may be more advantageous than the transverse layout structure for the parallel vertical rail robot arm system 110.

A cross-transfer system 120 may preferably be configured such that the gantry crane 121 and the jib crane 125 are arranged to intersect with each other. Because the cross-transfer system 120 and the parallel vertical rail robot arm system 110 have a close relationship with each other in terms of their functions, the layout of the cross-transfer system 120 may greatly be affected by the layout of the parallel vertical rail robot arm system 110.

If two gantry cranes 121 are arranged in parallel, the two gantry cranes 121 interfere with each other in the same working space, and thereby only one of the two gantry cranes 121 must be used within the same working space, which may lower operation efficiency.

The gantry crane 121 and the jib crane 125 may be located on the top of the reactor pool 101 to be higher than the parallel vertical rail robot arm system 110 and the band saw and turntable system 130 and may be disposed to intersect with each other without interference during movement. Accordingly, within the same working space, the gantry crane 121 may mainly transfer a large object to be cut to the turntable 134 or hold the object to be cut and the jib crane 125 may transfer the temporary storage basket 141 in which cut pieces are accommodated or transfer the cut pieces.

Meanwhile, in the turntable system, the height of the horizontal support frame 135 may preferably be equal to or higher than an upper surface of the reactor cavity structure 103.

If the height of the horizontal support frame 135 is lower than the upper surface of the reactor cavity structure 103, the turntable 134 may interfere with one side surface of the reactor cavity structure 103 upon the horizontal movement along the horizontal guide rails 1351 of the horizontal support frame 135, which may cause a horizontal movement distance of the turntable 134 to be decreased. In order to compensate for the distance decrease, if the height of the horizontal support frame 135 is increased to be the same as the height of the upper surface of the reactor cavity structure 103, the turntable 134 may not interference with the reactor cavity structure 103, result in further securing the horizontal movement distance.

The band saw and turntable system 130 may be disposed between the reactor cavity structure 103 and the parallel vertical rail robot arm system 110. The turntable 134 may horizontally move between the reactor cavity structure 103 and the parallel vertical rail robot arm system 110 and the band saw system may effectively cut a thick object by using the turntable 134 which can move horizontally and rotate.

In addition, the parallel vertical rail robot arm system 110 may cut and transfer objects of various structures to be dismantled in a narrow area using the horizontal movement mechanism of the turntable 134.

Waste storage containers 142 may be disposed at both left and right sides along the traveling rails 122 of the gantry crane 121.

The temporary storage basket 141 may have a space that is disposed at the bottom along the parallel vertical rail 113 to accommodate cut pieces.

Such dual arm robot-based dismantling system for the nuclear power plant using the cutting robot arm 111 and the transfer robot arm 112 can solve the following two problems.

First, cut pieces of a complex reactor structure can be easily transferred.

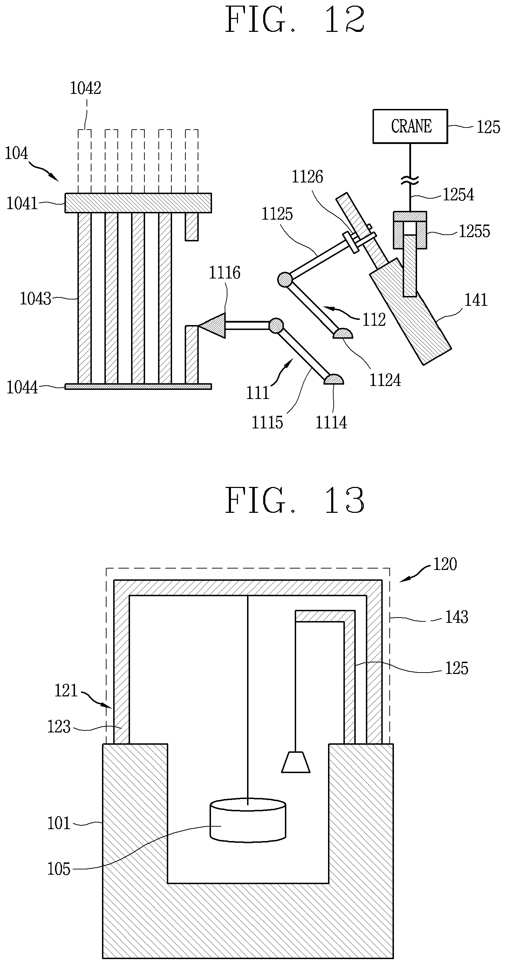

FIG. 12 is a conceptual view illustrating a state in which the cutting robot arm cuts a part of the upper internal structure and the transfer robot arm 112 transfers the cut piece, according to the present disclosure.

Hereinafter, a dismantling process for the upper internal structure 104, which is the most complex among structures constituting the reactor pool 101 will be described.

First, the upper internal structure 104 of the reactor water pool 101 may be transferred to the turntable 134 using the gantry crane 121.

Then, the cutting robot arm 111 may be used to cut a first control rod guide tube 1042 and an upper measurement column that protrude from the top of the upper support assembly 1041, and transfer the cut pieces. The cut pieces may be transferred using the jib crane 125. Or the cut pieces may first be put in the temporary storage basket 141 using the transfer robot arm 112 and then the temporary storage basket 141 may be transferred using the gantry crane 121 or the jib crane 125.

Then, in order to cut and transfer the upper support assembly 1041, a second control rod guide tube 1043 and an upper support column located beneath the upper support assembly 1041 must be first cut. Therefore, it is necessary to cut the second control rod guide tube 1043 and the upper support column and transfer the cut pieces.

At this time, since the upper support assembly 1041 still remains on the top, the gripper 1255 lowered from the jib crane 125 may be difficult to grip the cut pieces. Therefore, while the transfer robot arm 112 grips the second control rod guide tube 1043 and the upper support column, the cutting robot arm 111 may cut the second control rod guide tube 1043 and the upper support column. Thereafter, the transfer robot arm 112 may transfer the cut piece to the temporary storage basket 141 gripped by the gripper 1243 of the gantry crane 121 or the gripper 1255 of the jib crane 125. When the temporary storage basket 141 is filled with the cut pieces, the gantry crane 121 or the jib crane 125 may operate to transfer the temporary storage basket 141.

Therefore, by using the cutting robot arm 111 and the transfer robot arm 112, the second control rod guide tube 1043 and the upper support column beneath the upper support assembly 1041 can be gripped by the transfer robot arm 112 instead of the crane although the upper support assembly 1041 still remains at the top, and then be cut by the cutting robot arm 111, so as to allow the transfer of the upper support assembly 1041.

In addition, since the crane is operated after the temporary storage basket 141 is fully filled with the cut pieces, the time required for the process can be shortened and the manipulation of the crane can also be simplified.

Second, a dismantling workplace can be effectively sealed.

FIG. 13 is a cross-sectional view taken along the line XIII-XIII of FIG. 11, which is a conceptual view illustrating a state in which a sealing member 143 seals a dismantling workplace.

In FIG. 11, when viewed in a direction indicated by an arrow XIII in FIG. 11, that is, in the lengthwise direction of the traveling rails 122, the gantry crane 121 and the moving frame 123 are installed on the top of the reactor pool 101 and the jib crane 125 is disposed inside the gantry crane 121 and the moving frame 123. With the structure, even if lifting of a structure to be dismantled and transfer of cut pieces are simultaneously performed by the gantry crane 111 and the jib crane 125, respectively, in the same space (temporary accommodation space 102), the outside of the gantry crane 121 may be sealed with a sealing member 143 such as vinyl.

One side of the sealing member 143 may be connected to one side of the upper portion of the reactor pool 101 and another side of the sealing member 143 may be connected to another side of the upper portion of the reactor pool 101, so as to seal the upper portion of the reactor pool 101. In order to support the sealing member 143 to be spaced apart from the moving frame 123 so that the sealing member 143 does not interfere with the movement of the moving frame 123, a plurality of supports (not illustrated) in the form of an upside-down "U" may be provided, to support the sealing member 143.

Therefore, according to the present disclosure, by arranging the gantry crane 121 and the jib crane 125 in an intersecting manner without a polar crane as a transfer system, the dismantling system for the nuclear power plant can be effectively sealed, and also leakage of harmful gas that may occur during thermal cutting can be prevented even if a thermal cutting technique such as oxygen-propane cutting or laser cutting that has recently been in the spotlight.

The dual arm robot-based remote dismantling system for the nuclear power plant proposed in the present disclosure may be connected to a remote control unit that is far apart from the dismantling workplace so as to perform communication with the remote control unit. The dismantling system for the nuclear power plant may be connected to a main controller, a unit module controller, an environmental information acquisition system, and the like, in addition to the hardware configuration, so as to be remotely controlled by receiving a control signal from the remote control unit.

## Claims

1. A remote dismantling system for a nuclear power plant, comprising:
a robot arm system (110) provided with a cutting robot arm (111) for cutting an object to be cut and a transfer robot arm (112) for transferring cut pieces, which have been cut from the object to be cut, the cutting robot arm (111) and the transfer robot arm (112) being arranged to be movable in a vertical direction, respectively;
a transfer system provided with a gantry crane (121) for transferring the object to be cut and a jib crane (125) for receiving and transferring the cut pieces from the transfer robot arm (112), the gantry crane (121) and the jib crane (125) being arranged to be movable across each other; and
a band saw and turntable system (130) provided with a horizontal support frame (135), a turntable (134) having the object to be cut placed thereon, and installed on the horizontal support frame (135) to be horizontally movable and rotatable, and a band saw (131) for cutting the object to be cut placed on the turntable (134).

2. The system of claim 1, wherein the robot arm system (110) comprises:
a plurality of vertical rails (113) extending in parallel in a vertical direction and having the cutting robot arm (111) and the transfer robot arm (112) mounted thereto to be movable up and down; and
lifting blocks (114) mounted to the plurality of vertical rails (113) to be movable up and down and allowing the cutting robot arm (111) or the transfer robot arm (112) to be movable up and down.

3. The system of claim 2, wherein the band saw and turntable system (130) further comprises a supporting part (113) extending in the vertical direction and disposed on one side surface of the horizontal support frame (135), and an up/down movement part installed to be movable up and down along the supporting part (113), and
wherein the band saw (131) is rotatably mounted on the up/down movement part.

4. The system of claim 3, wherein the transfer system comprises a plurality of traveling rails (122) disposed above the robot arm system (100) and the band saw and turntable system (130) and spaced apart from each other, the gantry crane (121) being movably mounted to the plurality of traveling rails (122).

5. The system of any one of claims 1 to 4, wherein the cutting robot arm (111) is provided with any one of a laser cutting head (1116a), a circular saw (1116b), and a drill as an end-effector, wherein the transfer robot arm (112) is provided with a gripper as an end-effector.

6. The system of any one of claims 3 to 5, wherein the up/down movement part (132) is formed in a rectangular plate shape having one side open, and
wherein the band saw and turntable system (130) further comprises support rollers rotatably mounted on four corners of one surface of the up/down movement part (132) to rotatably support the band saw (131).

7. The system of any one of claims 2 to 6, wherein the horizontal support frame (135) is formed in a rectangular shape, and
wherein the plurality of vertical rails (113) is spaced apart from each other along a side surface of the horizontal support frame (135) in a longitudinal direction when viewing the horizontal support frame (135) from the top, such that the cutting robot arm (111) and the transfer robot arm (112) are mounted to the plurality of vertical rails (113) to be movable in a direction intersecting with the turntable (134) that horizontally moves in a transverse direction of the horizontal support frame (135),
wherein the cutting robot arm (111) and the transfer robot arm (112) are spaced apart from each other on a right surface of the horizontal support frame (135) in a longitudinal direction.

8. The system of claim 7, wherein the band saw and turntable system (130) further comprises a supporting part (113) extending along the vertical direction and disposed on one side surface of the horizontal support frame (135), and
wherein the supporting part (113) is disposed on a side surface of the horizontal support frame (135) in the transverse direction when viewing the horizontal support frame (135) from the top, and the band saw (131) is mounted to the supporting part (113) to be movable in the direction intersecting with the turntable (134) that horizontally moves in the transverse direction of the horizontal support frame (135).

9. The system of any one of claims 4 to 8, wherein the gantry crane (121) comprises:
a moving frame (123) mounted to be movable along the traveling rails (122);
a longitudinal movement unit (124) mounted on an upper portion of the moving frame (123) to be movable in the longitudinal direction intersecting with the traveling rails (122);
a winding unit provided on the longitudinal movement unit (124) to wind a wire; and
a gripper (1126a) connected to one end of the wire to be moved down toward the turntable (134) from the winding unit and moved up toward an original position.

10. The system of claim 9, wherein the jib crane (125) comprises:
a vertical column part (1251) disposed between the plurality of traveling rails;
a rotation arm part (1252) extending from an upper end portion of the vertical column part (1251) in a direction intersecting with the moving frame (123) that extends in the longitudinal direction across the plurality of traveling rails (122), and installed to be rotatable centering on the vertical column part (1251);
a movable winding portion mounted to be movable along with the rotation arm part (1252) and having a wire wound thereon; and
a gripper (1126a) connected to the wire of the movable winding portion and installed to be moved down toward the transfer robot arm (112) from the movable winding portion or moved up toward an original position.

11. A remote dismantling method using the system of any one of claims 1 to 10, wherein the object to be cut is an upper internal structure among structures constituting a nuclear reactor vessel,
wherein the upper internal structure (104) comprises:
an upper support assembly (1041);
an upper core plate spaced apart downwardly from the upper support assembly (1041);
first control rod guide tubes (1042) and upper measurement columns protruding from a top of the upper support assembly (1041); and
second control rod guide tubes (1043) and upper support columns extending downward from a bottom of the upper support assembly (1041) to the upper core plate,
wherein the transfer robot arm (112) grips the second control rod guide tube and the upper support column for the transfer of the upper support assembly (1041) while the upper support assembly (1041) remains on the top, and
wherein the cutting robot arm (111) cuts a part of the second control rod guide tube and the upper support column.

12. The method of claim 11, wherein a temporary storage basket is installed within a rotation radius of the transfer robot arm (112), and
wherein the transfer robot arm (112) transfers the cut pieces to the temporary storage basket gripped by the jib crane (125).

13. The system of claim 1, wherein the gantry crane (121) and the jib crane (125) are arranged to intersect with each other without interference during movement, wherein the gantry crane (121) and the jib crane (125) are disposed on a top of a reactor pool (101), and
wherein the remote dismantling system further comprises a sealing member (134) having both sides connected to the top of the reactor pool (101) to enclose an outside of the gantry crane (121) and the jib crane (125) so as to seal the top of the reactor pool (101).

14. The system of claim 1 or 13, wherein the horizontal support frame (135) has a height equal to or higher than an upper surface of the reactor cavity structure (103), so that a horizontal movement distance of the turntable (134) from the cutting robot arm (111) extends up to the upper surface of the reactor cavity structure (103).

## Patentansprüche

1. Ferndemontagesystem für ein Kernkraftwerk, umfassend:
ein Roboterarmsystem (110), das mit einem Schneidroboterarm (111) zum Zerschneiden eines zu zerschneidenden Objekts und mit einem Überführungsroboterarm (112) zum Überführen von zerschnittenen Stücken, die von dem zu zerschneidenden Objekt abgeschnitten wurden, versehen ist, wobei der Schneidroboterarm (111) und der Überführungsroboterarm (112) dazu eingerichtet sind, jeweils in einer vertikalen Richtung bewegbar zu sein;
ein Überführungssystem, das mit einem Portalkran (121) zum Überführen des zu zerschneidenden Objekts und mit einem Auslegerkran (125) zum Aufnehmen und Überführen der zerschnittenen Stücke von dem Überführungsroboterarm (112) versehen ist, wobei der Portalkran (121) und der Auslegerkran (125) dazu eingerichtet sind, quer übereinander bewegbar zu sein; und
ein Bandsäge- und Drehtischsystem (130), das mit einem horizontalen Traggestell (135), einem Drehtisch (134), auf dem das zu zerschneidende Objekt liegt und der auf dem horizontalen Traggestell (135) installiert ist, um horizontal bewegbar und drehbar zu sein, und mit einer Bandsäge (131) zum Zerschneiden des zu zerschneidenden Objekts, das auf dem Drehtisch (134) liegt, versehen ist.

2. System nach Anspruch 1, wobei das Roboterarmsystem (110) umfasst:
eine Vielzahl von vertikalen Schienen (113), die sich in einer vertikalen Richtung parallel erstrecken, und an denen der Schneidroboterarm (111) und der Überführungsroboterarm (112) montiert sind, um auf und ab bewegbar zu sein; und
Flaschenzüge (114), die an der Vielzahl von vertikalen Schienen (113) montiert sind, um auf und ab bewegbar zu sein, und die es dem Schneidroboterarm (111) oder dem Überführungsroboterarm (112) ermöglichen, auf und ab bewegbar zu sein.

3. System nach Anspruch 2, wobei das Bandsäge- und Drehtisch-System (130) ferner einen tragenden Teil (113), der sich in der vertikalen Richtung erstreckt und auf einer seitlichen Oberfläche des horizontalen Traggestells (135) angeordnet ist, und einen Auf/Ab-Bewegungsteil, der installiert ist, um entlang dem tragenden Teil (113) auf und ab bewegbar zu sein, umfasst, und
wobei die Bandsäge (131) auf dem Auf/Ab-Bewegungsteil drehbar montiert ist.

4. System nach Anspruch 3, wobei das Überführungssystem eine Vielzahl von Laufschienen (122) umfasst, die oberhalb des Roboterarmsystems (100) und des Bandsäge- und Drehtisch-Systems (130) angeordnet und voneinander beabstandet sind, wobei der Portalkran (121) an der Vielzahl von Laufschienen (122) bewegbar montiert ist.

5. System nach einem der Ansprüche 1 bis 4, wobei der Schneidroboterarm (111) mit einem von einem Laserschneidkopf (1116a), einer Kreissäge (1116b) und einem Bohrer als Endeffektor versehen ist, wobei der Überführungsroboterarm (112) mit einem Greifer als Endeffektor versehen ist.

6. System nach einem der Ansprüche 3 bis 5, wobei der Auf/Ab-Bewegungsteil (132) in einer rechteckigen Platte gebildet ist, die eine offene Seite aufweist, und
wobei das Bandsäge- und Drehtisch-System (130) ferner Tragrollen umfasst, die drehbar an vier Ecken einer Oberfläche des Auf/Ab-Bewegungsteils (132) montiert sind, um die Bandsäge (131) drehbar zu tragen.

7. System nach einem der Ansprüche 2 bis 6, wobei das horizontale Traggestell (135) in einer rechteckigen Form gebildet ist, und
wobei die Vielzahl von vertikalen Schienen (113) entlang einer seitlichen Oberfläche des horizontalen Traggestells (135) in einer Längsrichtung, wenn das Traggestell (135) von oben gesehen ist, voneinander beabstandet sind, so dass der Schneidroboterarm (111) und der Überführungsroboterarm (112) an der Vielzahl von vertikalen Schienen (113) montiert sind, um in einer Richtung bewegbar zu sein, die sich mit dem Drehtisch (134) kreuzt, der sich horizontal in einer Querrichtung des horizontalen Traggestells (135) bewegt,
wobei der Schneidroboterarm (111) und der Überführungsroboterarm (112) auf einer rechten Oberfläche des horizontalen Traggestells (135) in einer Längsrichtung voneinander beabstandet sind.

8. System nach Anspruch 7, wobei das Bandsäge- und Drehtisch-System (130) ferner einen tragenden Teil (113) umfasst, der sich entlang der vertikalen Richtung erstreckt und auf einer seitlichen Oberfläche des horizontalen Traggestells (135) angeordnet ist, und
wobei der tragende Teil (113) auf einer seitlichen Oberfläche des horizontalen Traggestells (135) in der Querrichtung angeordnet ist, wenn das horizontale Traggestell (135) von oben gesehen ist, und die Bandsäge (131) an dem tragenden Teil (113) montiert ist, um in der Richtung bewegbar zu sein, die sich mit dem Drehtisch (134) kreuzt, der sich in der Querrichtung des horizontalen Traggestells (135) horizontal bewegt.

9. System nach einem der Ansprüche 4 bis 8, wobei der Portalkran (121) umfasst:
ein bewegliches Gestell (123), das montiert ist, um entlang der Laufschienen (122) bewegbar zu sein;
eine Längsbewegungseinheit (124), die an einem oberen Abschnitt des beweglichen Gestells (123) montiert ist, um in der Längsrichtung bewegbar zu sein, die sich mit den Laufschienen (122) kreuzt;
eine Wickeleinheit, die auf der Längsbewegungseinheit (124) bereitgestellt wird, um einen Draht aufzuwickeln; und
einen Greifer (1126a), der mit einem Ende des Drahts verbunden ist, das nach unten in Richtung auf den Drehtisch (134) von der Wickeleinheit ab und nach oben in Richtung auf eine Ausgangsposition bewegt werden soll.

10. System nach Anspruch 9, wobei der Auslegerkran (125) umfasst:
einen vertikalen Säulenteil (1251), der zwischen der Vielzahl von Laufschienen angeordnet ist;
einen Rotationsarmteil (1252), der sich von einem oberen Endabschnitt des vertikalen Säulenteils (1251) ab in einer Richtung erstreckt, die sich mit dem beweglichen Gestell (123) kreuzt, das sich in der Längsrichtung über die Vielzahl von Laufschienen (122) erstreckt, und installiert ist, um auf den vertikalen Säulenteil (1251) zentriert drehbar zu sein;
einen beweglichen Wickelabschnitt, der montiert ist, um zusammen mit dem Rotationsarmteil (1252) bewegbar zu sein, und einen darum gewickelten Draht aufweist; und
einen Greifer (1126a), der mit dem Draht des beweglichen Wickelabschnitts verbunden ist und installiert ist, um nach unten in Richtung auf den Überführungsroboterarm (112) von dem beweglichen Wickelabschnitt ab oder nach oben in Richtung auf eine Ausgangsposition bewegt zu werden.

11. Ferndemontageverfahren, welches das System nach einem der Ansprüche 1 bis 10 verwendet, wobei das zu zerschneidende Objekt eine obere interne Struktur von Strukturen, die einen Kernreaktorbehälter bilden, ist;
wobei die obere interne Struktur (104) umfasst:
eine obere Tragbaugruppe (1041);
eine obere Kernhalteplatte, die nach unten von der oberen Tragbaugruppe (1041) beabstandet ist;
erste Steuerstabführungsröhren (1042) und obere Messsäulen, die aus einem oberen Teil der oberen Tragbaugruppe (1041) vorstehen; und
zweite Steuerstabführungsröhren (1043) und obere Tragsäulen, die sich von einem unteren Teil der oberen Tragbaugruppe (1041) ab nach unten zu der oberen Kernhalteplatte erstrecken,
wobei der Überführungsroboterarm (112) die zweite Steuerstabführungsröhre und die obere Tragsäule für die Überführung der oberen Tragbaugruppe (1041) ergreift, während die obere Tragbaugruppe (1041) auf dem oberen Teil bleibt, und
wobei der Schneidroboterarm (111) einen Teil der zweiten Steuerstabführungsröhre und der oberen Tragsäule zerschneidet.

12. Verfahren nach Anspruch 11, wobei ein zeitweiliger Speicherkorb in einem Rotationsradius des Überführungsroboterarms (112) installiert ist, und
wobei der Überführungsroboterarm (112) die zerschnittenen Stücke zu dem zeitweiligen Speicherkorb, der von dem Auslegerkran (125) ergriffen wird, überführt.

13. System nach Anspruch 1, wobei der Portalkran (121) und der Auslegerkran (125) dazu eingerichtet sind, sich während der Bewegung ohne Störung zu kreuzen, wobei der Portalkran (121) und der Auslegerkran (125) auf einem oberen Teil eines Reaktorbeckens (101) angeordnet sind, und
wobei das Ferndemontagesystem ferner ein Dichtelement (134) umfasst, dessen beide Seiten mit dem oberen Teil des Reaktorbeckens (101) verbunden sind, um eine Außenseite des Portalkrans (121) und des Auslegerkrans (125) derart einzuschließen, dass der obere Teil des Reaktorbeckens (101) abgedichtet wird.

14. System nach Anspruch 1 oder 13, wobei das horizontale Traggestell (135) eine Höhe aufweist, die gleich oder größer als eine obere Oberfläche der Reaktorgrubenstruktur (103) ist, so dass sich eine horizontale Bewegungsdistanz des Drehtisches (134) von dem Schneidroboterarm (111) nach oben bis zu der oberen Oberfläche der Reaktorgrubenstruktur (103) erstreckt.

## Revendications

1. Système de démantèlement à distance pour une centrale nucléaire comprenant :
un système de bras robotisé (110) équipé d'un bras robotisé de coupe (111) pour couper un objet à couper et d'un bras robotisé de transfert (112) pour transférer les pièces coupées, qui ont été coupées de l'objet à couper, le bras robotisé de coupe (111) et le bras robotisé de transfert (112) étant agencés pour être mobiles dans une direction verticale, respectivement ;
un système de transfert doté d'un portique (121) pour le transfert de l'objet à découper et d'une potence (125) pour la réception et le transfert des pièces découpées à partir du bras du robot de transfert (112), le portique (121) et la potence (125) étant conçus pour se déplacer l'un par rapport à l'autre ; et
un système de scie à ruban et de plateau tournant (130) comprenant un cadre de support horizontal (135), un plateau tournant (134) sur lequel est placé l'objet à découper et qui est installé sur le cadre de support horizontal (135) pour être déplaçable et rotatif horizontalement, et une scie à ruban (131) pour découper l'objet à découper placé sur le plateau tournant (134).

2. Système selon la revendication 1, dans lequel le système de bras robotisé (110) comprend :
une pluralité de rails verticaux (113) s'étendant parallèlement dans une direction verticale et sur lesquels le bras robotisé de coupe (111) et le bras robotisé de transfert (112) sont montés pour être déplacés vers le haut et vers le bas ; et
des blocs de levage (114) montés sur la pluralité de rails verticaux (113) pour être déplacés vers le haut et vers le bas et permettre au bras robotisé de coupe (111) ou au bras robotisé de transfert (112) d'être déplacé vers le haut et vers le bas.

3. Système selon la revendication 2, dans lequel le système de scie à ruban et de plateau tournant (130) comprend en outre une partie de support (113) s'étendant dans la direction verticale et disposée sur une surface latérale du cadre de support horizontal (135), et une partie de mouvement vers le haut/bas installée pour être déplacée vers le haut et vers le bas le long de la partie de support (113), et
dans lequel la scie à ruban (131) est montée de manière rotative sur la partie de mouvement ascendant/descendant.

4. Système selon la revendication 3, dans lequel le système de transfert comprend une pluralité de rails de déplacement (122) disposés au-dessus du système de bras robotisé (110) et du système de scie à ruban et de table tournante (130) et espacés les uns des autres, le portique (121) étant monté de manière mobile sur la pluralité de rails de déplacement (122).

5. Système selon l'une des revendications 1 à 4, dans lequel le bras robotisé de coupe (111) est équipé d'une tête de découpe laser (1116a), d'une scie circulaire (1116b) et d'une perceuse en tant qu'effecteur final, le bras robotisé de transfert (112) étant équipé d'une pince en tant qu'effecteur final.

6. Système selon l'une des revendications 3 à 5, dans lequel la partie de mouvement haut/bas (132) est formée d'une plaque rectangulaire dont un côté est ouvert, et
dans lequel le système de scie à ruban et de plateau tournant (130) comprend en outre des rouleaux de support montés de manière rotative sur les quatre coins d'une surface de la partie de mouvement ascendant/descendant (132) pour soutenir de manière rotative la scie à ruban (131).

7. Système selon l'une des revendications 2 à 6, dans lequel le cadre de support horizontal (135) est de forme rectangulaire, et
dans lequel la pluralité de rails verticaux (113) est espacée les uns des autres le long d'une surface latérale du cadre de support horizontal (135) dans une direction longitudinale lorsque l'on regarde le cadre de support horizontal (135) par le haut, de sorte que le bras robotisé de coupe (111) et le bras robotisé de transfert (112) sont montés sur la pluralité de rails verticaux (113) pour être mobiles dans une direction croisant la table tournante (134) qui se déplace horizontalement dans une direction transversale du cadre de support horizontal (135),
dans lequel le bras robotisé de coupe (111) et le bras robotisé de transfert (112) sont espacés l'un de l'autre sur une surface droite du cadre de support horizontal (135) dans une direction longitudinale.

8. Système selon la revendication 7, dans lequel le système de scie à ruban et de plateau tournant (130) comprend en outre une pièce de support (113) s'étendant le long de la direction verticale et disposée sur une surface latérale du cadre de support horizontal (135), et
dans lequel la pièce de support (113) est disposée sur une surface latérale du cadre de support horizontal (135) dans la direction transversale lorsque l'on regarde le cadre de support horizontal (135) par le haut, et la scie à ruban (131) est montée sur la pièce de support (113) pour être mobile dans la direction croisant la table tournante (134) qui se déplace horizontalement dans la direction transversale du cadre de support horizontal (135).

9. Système selon l'une des revendications 4 à 8, dans lequel le portique (121) comprend :
un cadre mobile (123) monté pour être déplacé le long des rails de déplacement (122) ;
une unité de mouvement longitudinal (124) montée sur une partie supérieure du cadre mobile (123) pour être mobile dans la direction longitudinale croisant les rails de déplacement (122) ;
une unité d'enroulement prévue sur l'unité de mouvement longitudinal (124) pour enrouler un fil ; et
une pince (1126a) reliée à une extrémité du fil à déplacer vers le bas vers le plateau tournant (134) à partir de l'unité d'enroulement et à déplacer vers le haut vers une position d'origine.

10. Système selon la revendication 9, dans lequel la potence (125) comprend :
une partie de colonne verticale (1251) disposée entre la pluralité de rails de déplacement (122) ;
une partie de bras de rotation (1252) s'étendant à partir d'une partie d'extrémité supérieure de la partie de colonne verticale (1251) dans une direction croisant le cadre mobile (123) qui s'étend dans la direction longitudinale à travers la pluralité de rails de déplacement (122), et installé pour être rotatif centré sur la partie de colonne verticale (1251) ;
une partie d'enroulement mobile montée pour être déplacée le long de la partie du bras de rotation (1252) et sur laquelle est enroulé un fil ; et
une pince (1126a) reliée au fil de la partie mobile de l'enroulement et installée pour être déplacée vers le bas en direction du bras du robot de transfert (112) à partir de la partie mobile de l'enroulement ou déplacée vers le haut en direction d'une position d'origine.

11. Procédé de démantèlement à distance utilisant le système selon l'une des revendications 1 à 10, dans lequel l'objet à découper est une structure interne supérieure parmi les structures constituant une cuve de réacteur nucléaire,
dans lequel la structure interne supérieure (104) comprend :
un ensemble de support supérieur (1041) ;
une plaque centrale supérieure espacée vers le bas de l'ensemble de support supérieur (1041) ;
les premiers tubes de guidage de la tige de commande (1042) et les colonnes de mesure supérieures faisant saillie à partir d'un sommet de l'ensemble de support supérieur (1041) ; et
les seconds tubes de guidage de la tige de commande (1043) et les colonnes de support supérieures s'étendant vers le bas depuis le bas de l'ensemble de support supérieur (1041) jusqu'à la plaque de noyau supérieure,
dans lequel le bras du robot de transfert (112) saisit le second tube de guidage de la tige de commande et la colonne de support supérieure pour le transfert de l'ensemble de support supérieur (1041) tandis que l'ensemble de support supérieur (1041) reste sur le dessus, et
dans lequel le bras robotisé de coupe (111) coupe une partie du second tube de guidage de la tige de commande et de la colonne de support supérieure.

12. Procédé selon la revendication 11, dans lequel un panier de stockage temporaire est installé dans un rayon de rotation du bras du robot de transfert (112), et
dans lequel le bras du robot de transfert (112) transfère les pièces coupées dans le panier de stockage temporaire saisi par la grue à flèche (125).

13. Système selon la revendication 1, dans lequel le portique (121) et la potence (125) sont disposés de manière à se croiser sans interférence pendant le mouvement, dans lequel le portique (121) et la potence (125) sont disposés sur le dessus d'une piscine de réacteur (101), et
dans lequel le système de démantèlement à distance comprend en outre un élément d'étanchéité (143) dont les deux côtés sont reliés au sommet de la piscine du réacteur (101) afin d'entourer l'extérieur de la grue à portique (121) et de la grue à flèche (125) de manière à sceller le sommet de la piscine du réacteur (101).

14. Système selon la revendication 1 ou 13, dans lequel le cadre de support horizontal (135) a une hauteur égale ou supérieure à une surface supérieure de la structure de la cavité du réacteur (103), de sorte qu'une distance de mouvement horizontal de la table tournante (134) du bras robotisé de coupe (111) s'étend jusqu'à la surface supérieure de la structure de la cavité du réacteur (103).
